# EUROPÄISCHE PATENTSCHRIFT

(11) **EP 1 425 904 B1**
(45) Veröffentlichungstag und Bekanntmachung des Hinweises auf die Patenterteilung: **11.08.2010**
(21) Anmeldenummer: 02772294.1
(22) Anmeldetag: 12.09.2002
(51) Int. Cl.: H04N 5/222

(54) **KÖRPERMONTIERBARES KAMERATRAGSYSTEM MIT EINEM MULTIFUNKTIONALEN VERBUND ELEKTRISCHER KOMPONENTEN**
CAMERA SUPPORT DEVICE WORN ON THE BODY COMPRISING A MULTIFUNCTIONAL ASSEMBLY OF ELECTRICAL COMPONENTS
SYSTEME DE PORTAGE DE CAMERA POUVANT ETRE MONTE SUR LE CORPS, DOTE D'UN ASSEMBLAGE MULTIFONCTIONNEL DE COMPOSANTS ELECTRIQUES

(30) Priorität: 13.09.2001 DE 10145193
(43) Veröffentlichungstag der Anmeldung: 09.06.2004
(60) Teilanmeldung: 09180794.1
(73) Patentinhaber: Camera Dynamics GmbH, 85386 Eching (DE)
(72) Erfinder: SCHALLER, Curt, O., 81541 München (DE)
(74) Vertreter: HOFFMANN EITLE
(86) Internationale Anmeldenummer: PCT/EP2002/010244
(87) Internationale Veröffentlichungsnummer: WO 2003/024093

(56) Entgegenhaltungen:
- WO-A-88/06695
- PATENT ABSTRACTS OF JAPAN vol. 2000, no. 05, 14. September 2000 (2000-09-14) & JP 2000 050157 A (NEC CORP), 18. Februar 2000 (2000-02-18) & US 6 437 834 A (TAGAMI) 20. August 2002 (2002-08-20)
- PATENT ABSTRACTS OF JAPAN vol. 017, no. 646 (E-1467), 30. November 1993 (1993-11-30) -& JP 05 207338 A (MATSUSHITA ELECTRIC IND CO LTD), 13. August 1993 (1993-08-13)
- PATENT ABSTRACTS OF JAPAN vol. 017, no. 050 (E-1314), 29. Januar 1993 (1993-01-29) -& JP 04 264887 A (SONY CORP), 21. September 1992 (1992-09-21)

## Beschreibung

Die Erfindung betrifft ein körpermontierbares Kameratragesystem mit einem multifunktionalen Verbund elektrischer Komponenten.

Körpermontierbare Kameratragesysteme sind bekannt und beispielsweise in EP 0 316 370 A1 beschrieben. Mit diesen Kameratragesystemen können Kameras, Peripheriegeräte und die für die Stromversorgung erforderlichen Batterien oder Akkus von einem Kameramann getragen und unabhängig von den Bewegungen des Kameramanns stabil gehalten werden. Für die Verbindung der Kamera, der Peripheriegeräte und der Stromversorgung untereinander sind in der Regel mehrere Anschlüsse und eine Verkabelung vorhanden, damit die entsprechenden Verbindungen hergestellt werden können, ohne dass der Kameramann bei seiner Arbeit behindert wird.

Bei den bekannten Kameratragesystemen wird regelmäßig nur ein analoges Videosignal und die Stromversorgung über die in bzw. an dem Kameratragesystem vorgesehenen Verkabelung geführt. Auch die Anzahl der anschließbaren Peripheriegeräte ist beschränkt im Hinblick auf den mit der Verkabelung verbundenen Aufwand.

Dementsprechend gering ist die Flexibilität, die mit den bekannten Systemen erreicht wird.

Vor diesem Hintergrund beschreibt die Erfindung ein körpermontierbares Kameratragesystem mit einem multifunktionalen Verbund elektrischer Komponenten, nämlich: mit zumindest einer ersten Anschlusseinrichtung für die kabelgebundene Zuführung eines Videosignals von einer Kamera, zumindest einer zweiten Anschlusseinrichtung für die kabelgebundene Zuführung eines Videosignals zu einem Peripheriegerät, beispielsweise einem Monitor, einem Videoaufzeichnungsgerät und/oder einer Sendeeinrichtung für Videosignale, mehreren Signalleitungen für die Übertragung der Videosignale zwischen den Anschlusseinrichtungen, und zumindest einer Betriebsmodusumschalteinrichtung für die Umschaltung des Betriebsmodus der Anschlusseinrichtungen und der Signalleitungen, wobei in einem ersten Betriebsmodus die mehreren Signalleitungen für die Übertragung eines Videosignals eines ersten Typs, beispielsweise eines hochauflösendes Videosignal(HDTV), verwendbar sind und wobei in einem zweiten Betriebsmodus ein Teil der mehreren Signalleitungen für die Übertragung eines Videosignals eines zweiten Typs, beispielsweise eines niedrig auflösenden (analogen) oder digitalen (SDI) Videosignals, verwendbar ist und der verbleibende Teil der mehreren Signalleitungen für andere Zwecke verwendbar ist.

Durch diese Gestaltung des Verbunds der elektrischen Komponenten werden die für hochauflösende Videosignale erforderlichen Signalleitungen auf sinnvolle Weise auch dann genutzt, wenn das erfindungsgemäße Kameratragesystem mit einer analogen oder einer digitalen Kamera verwendet wird. Das heißt, dass mit ein und derselben Verkabelung sowie den vorhandenen Anschlussbuchsen sowohl hochauflösende Kameras als auch analoge und digitale Kameras an dem erfindungsgemäßen Kameratragesystem eingesetzt werden können. Die Anschlüsse sind entsprechend ausgelegt, und die erforderlichen Signalleitungen sind vorhanden. Werden einige Signalleitungen nicht für die Übertragung von Videosignalen benötigt, stehen erfindungsgemäß diese Leitungen für andere Verwendungen zur Verfügungen und werden entsprechend auf andere Weise genutzt. Damit wird erreicht, dass das erfindungsgemäße Kameratragesystem gegenüber den bekannten Systemen flexibler ist, ohne dass ein erhöhter und in einigen Anwendungsfällen ungenutzter Aufwand getrieben wird.

Daneben wird ein körpermontierbares Kameratragesystem der erfindungsgemäßen Gattung beschrieben, bei dem zumindest zwei Anschlusseinrichtungen mit zumindest einer zusätzlichen Signalleitung verbunden sind, so dass an der einen der zwei Anschlusseinrichtungen eine Sensoreinrichtung und an der anderen der zwei Anschlusseinrichtungen eine Signalgebereinrichtung kabelgebunden anschließbar sind. Dabei erfolgt die Verbindung mit Hilfe der zusätzlichen Signalleitung derart, dass sie über die Anschlusseinrichtungen genutzt werden kann, jedoch ohne dass die Funktion bzw. die Nutzung der für andere Zwecke vorgesehenen Anschlusseinrichtungen gestört wird.

Mit dieser Gestaltung wird erreicht, dass für den Fall, dass Anschlusseinrichtungen nicht benutzt werden, eine weitere Verwendung der Anschlusseinrichtung zusätzlich zur deren Hauptfunktion ermöglicht wird. Beispielsweise können das Signal eines Tally-Sensors, dessen Ausgangssignal das Aufleuchten der Tally-Lampe einer Kamera anzeigt, und das Ansteuersignal für einen Tally-Signalgeber, etwa eine Tally-Leuchtdiode, auf diese Weise über bereits vorhandene Anschlussbuchsen, die um einen zusätzlichen Anschluss für die zusätzliche Signalleitung ergänzt sind, geführt werden, natürlich in der Regel nur sofern die Anschlussbuchsen nicht entsprechend ihrer Hauptfunktion benutzt werden.

Im folgenden wird die Erfindung anhand eines Ausführungsbeispiels und unter Bezugnahme auf die Figuren genauer erläutert. Dabei zeigt:
- Fig. 1: eine grundlegende Darstellung des Aufbaus eines körpermontierbaren Kameratragesystems; und
- Fig. 2: den erfindungsgemäßen Verbund der elektrischen Komponenten des Kameratragesystems.

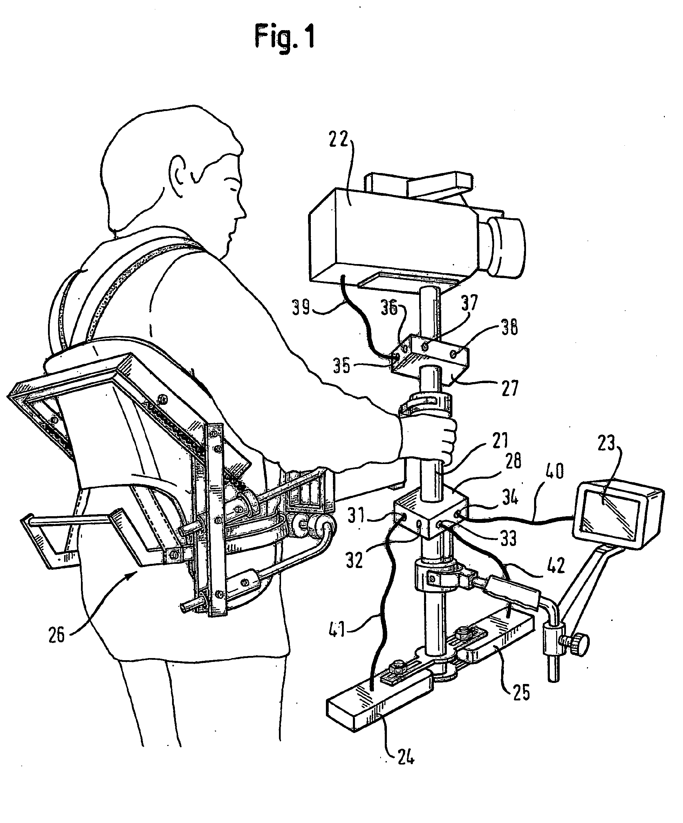

In Fig. 1 ist der Aufbau eines körpermontierbaren Kameratragesystems gezeigt, bei dem erfindungsgemäß ein multifunktionaler Verbund elektrischer Komponenten vorgesehen werden kann. An einer Halterung 21 werden beispielhaft eine Kamera 22, ein Monitor 23 und Batterien 24 und 25 befestigt. Das Halterohr ist mit einem Tragegerüst 26 verbunden, mit dessen Hilfe der Kameramann das körpermontierbare Kameratragesystem trägt. An dem Halterohr 21 sind ferner Anschlussgehäuse 27 und 28 vorgesehen, an denen Anschlussbuchsen 31 bis 38 angeordnet sind. Diese Anschlussbuchsen bieten die Möglichkeit, elektrische (Video)-Anschlusskabel 39 und 40 bzw. elektrische Stromversorgungskabel 41 und 42 von der Kamera, dem Monitor und den Batterien anzuschließen. An die Anschlussbuchsen können auch weitere Peripheriegeräte, beispielsweise Videoaufzeichnungsgeräte oder Sendeeinrichtungen für Videosignale mit entsprechenden Anschlusskabeln angeschlossen werden. Zwischen den Buchsen 31 bis 38 verlaufen Signal- und Stromversorgungsleitungen zumeist im Inneren des Rohres 21. Ferner können in dem Halterohr 21 und/oder den Anschlussgehäusen 27 und 28 elektrische Komponenten untergebracht werden. Insgesamt bilden diese einen Verbund aus elektrischen Komponenten der im folgenden noch genauer beschrieben wird.

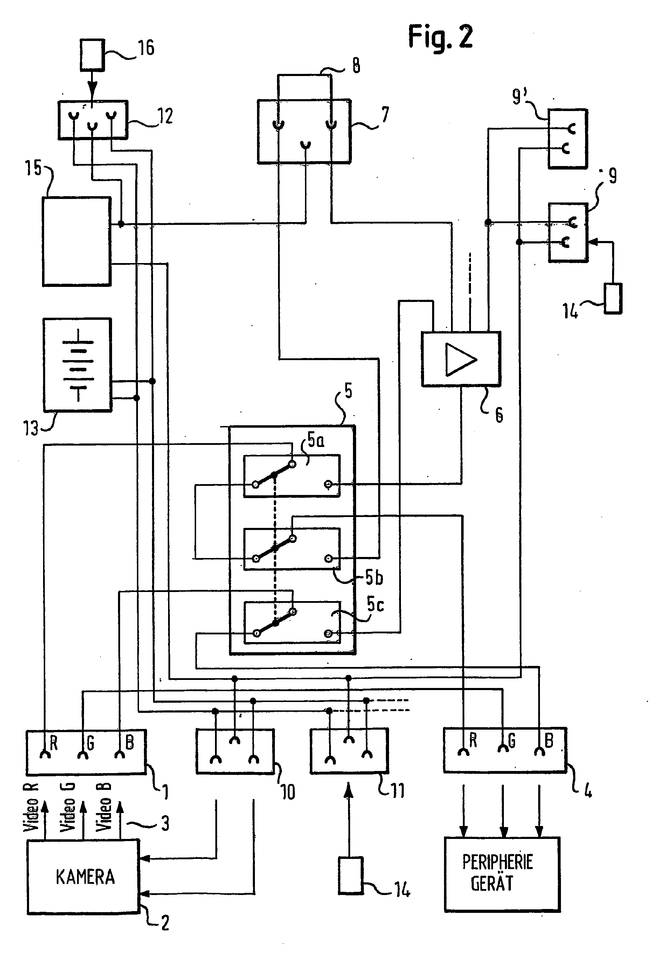

In Fig. 2 ist der erfindungsgemäße Verbund aus elektrischen Komponenten des körpermontierbaren Kameratragesystems dargestellt.

Erfindungsgemäß ist eine erste Anschlusseinrichtung 1 für die kabelgebundene Zuführung eines Videosignals von einer Kamera 2 vorgesehen. Das Videosignal, das von der Kamera 2 über ein entsprechendes Anschlusskabel 3 an die erste Anschlusseinrichtung 1 zugeführt wird, kann ein hochauflösendes oder niedrigauflösendes (analoges) Videosignal sein. Für den Fall eines hochauflösenden Videosignals (HDTV) werden herkömmlicher weise drei Signalleitungen benötigt. Demgegenüber wird für den Fall eines niedrigauflösenden (analogen) Videosignals herkömmlicher weise nur eine Signalleitung verwendet. Darüber hinaus können andere Videosignale, beispielsweise digitale Videosignale (SDI) über eine oder mehrere Videosignalleitungen geführt werden, die der ersten Anschlusseinrichtung 1 von der Kamera 2 über das Anschlusskabel 3 zugeführt werden.

In Fig. 2 ist ferner eine zweite Anschlusseinrichtung 4 für die kabelgebundene Zuführung eines Videosignals zu einem Peripheriegerät gezeigt. Auch bei dem Peripheriegerät kann das zugeführte Videosignal ein hochauflösendes, ein niedrigauflösendes (analoges) oder ein digitales Videosignal sein, so dass eine entsprechende Anzahl von Signalleitungen benötigt wird. Peripheriegeräte sind beispielsweise Monitore, Videoaufzeichnungsgeräte oder Videosignal-Sendeeinrichtungen.

Wie aus Fig. 2 erkennbar, sind mehrere Signalleitungen R, G, B für die Übertragung der Videosignale zwischen den Anschlusseinrichtungen 1 und 4 vorgesehen. Teilweise werden die Videosignale über eine ununterbrochene Signalleitung von der ersten Anschlusseinrichtung 1 zu der zweiten Anschlusseinrichtung 2 übertragen, wie beispielsweise für die Signalleitung G gezeigt ist; zum Teil findet die Übertragung der Videosignale aber auch über mehrere Abschnitte der Signalleitungen statt, wie für die Signalleitungen R und B gezeigt ist.

Erfindungsgemäß ist ferner eine Betriebsmodusumschalteinrichtung 5 vorgesehen, die den Verbund elektrischer Komponenten des erfindungsgemäßen Kameratragesystems zwischen zwei Betriebsmodi umschaltet. In einem ersten Betriebsmodus, für den die Schaltstellung der Umschalteinrichtung 5 gezeigt ist, werden die mehreren Signalleitungen R, G und B für die Übertragung eines hochauflösenden Videosignals (HDTV) verwendet. Das bedeutet, dass das Videosignal VideoR der Kamera 2 über die Signalleitung R und damit über eine erste Umschalteinheit 5a und eine zweite Umschalteinheit 5b an die zweite Anschlusseinheit 4 übertragen wird. Das Videosignal VideoB der Kamera 2 wird über die Signalleitung B und damit über die Umschalteinheit 5c an die zweite Anschlusseinheit 4 übertragen. Wie bereits erwähnt, stellt die Signalleitung G eine unmittelbare Verbindung zwischen der ersten Anschlusseinrichtung 1 und der zweiten Anschlusseinrichtung 4 her, so dass eine Übertragung des Videosignals G der Kamera 2 gewährleistet ist. Damit werden in dem ersten Betriebsmodus alle Videosignale VideoR, VideoG und VideoB einer hochauflösenden Videokamera 2 von der ersten Anschlusseinrichtung 1 an die zweite Anschlusseinrichtung 4 übertragen.

Wenn die Betriebmodusumschalteinrichtung 5 von der in Fig. 2 gezeigten ersten Schaltstellung in die in Fig. 2 nicht dargestellte, aber der Fig. 2 ebenfalls entnehmbare zweite Schaltstellung umgeschaltet wird, ist der Verbund elektrischer Komponenten des erfindungsgemäßen Kameratragesystems für niedrigauflösende (analoge) Videosignale, digitale oder andere Videosignale und andere Signale verwendbar. Das niedrigauflösende (analoge) Videosignal der Kamera 2 wird der Signalleitung R über die erste Anschlusseinrichtung 1 zugeführt und gelangt über die erste Umschalteinheit 5a und weitere Komponenten, die im folgenden noch genauer beschrieben werden, zur zweiten Anschlusseinrichtung 4. Zuvor wird das Videosignal aber von der ersten Umschalteinheit 5a einem Video-Verstärker/Multiplexer 6 zugeführt, der das zugeführte Videosignal verstärkt und auf mehrere Ausgänge verteilt. Das Videosignal eines ersten Ausgangs des Video-Verstärker/Multiplexers 6 wird einer dritten Anschlusseinrichtung 7 für die Zuführung von Videosignalen zu Peripheriegeräten zugeführt. Ein Videosignal des Peripheriegeräts kann von der dritten Anschlusseinrichtung 7 über die zweite Umschalteinheit 5b an die zweite Anschlusseinrichtung 4 geführt werden. Über eine Brücke 8 wird für den Fall, dass kein Peripheriegerät an die dritte Anschlusseinrichtung 7 angeschlossen ist, das Videosignal des ersten Ausgangs des Video-Verstärker/Multiplexers 6 über die zweite Umschalteinheit 5b an die zweite Anschlusseinrichtung 4 übertragen. Anstelle der Brücke 8 kann aber ein beliebiges Peripheriegerät zur Bearbeitung/Veränderung des Videosignals, das vom ersten Ausgang des Video-Verstärker/Multiplexers 6 der dritten Anschlusseinrichtung 7 zugeführt wird, angeschlossen werden, so dass dann von der dritten Anschlusseinrichtung 7 ein von dem Peripheriegerät verändertes/bearbeitetes Videosignal über die zweite Umschalteinheit 5b an die zweite Anschlusseinrichung 4 zugeführt wird.

Das Videosignal eines zweiten Ausgangs des Video-Verstärker/Multiplexers 6 wird einer vierten Anschlusseinrichtung 9 für die kabelgebundene Zuführung eines Videosignals zu einem Peripheriegerät zugeführt. Auf diese Weise kann ein weiteres Peripheriegerät neben den an der zweiten und der dritten Anschlusseinheit angeschlossenen Peripheriegeräten an den erfindungsgemäßen Verbund elektrischer Komponenten des Kameratragesystems angeschlossen werden. In Abhängigkeit von der Anzahl der Ausgänge des Video-Verstärker/Multiplexers 6 können zusätzliche Anschlusseinrichtungen für Peripheriegeräte vorgesehen sein.

Erfindungsgemäß wird die Signalleitung B im zweiten Betriebsmodus genutzt, um ein Videosignal von einem dritten Ausgang des Video-Verstärker/Multiplexers 6 über die dritte Umschalteinheit 5c an die erste Anschlusseinrichtung 1 zu übertragen.

Um die Kamera und/oder Peripheriegeräte mit Energie zu versorgen, umfasst der erfindungsgemäße Verbund elektrischer Komponenten vorzugsweise weitere Anschlusseinrichtungen 10, 11 und 12, die mit einer elektrischen Energieversorgungseinheit 13, die eine oder mehrere wiederaufladbare Batterien umfasst, verbunden sind und die für die Kamera und die Peripheriegeräte Anschlüsse an eine Spannungsversorgung bereitstellen. Die weiteren Anschlusseinrichtungen können, wie in Fig. 2 gezeigt, die gleiche Betriebsspannung zur Verfügung stellen oder unterschiedliche Betriebsspannungen für die Zuführung zur Kamera bzw. zu Peripheriegeräten ermöglichen.

Gemäß einer anderen Ausgestaltung ist an zumindest einer der Anschlusseinrichtungen eine zusätzliche Signalleitung vorgesehen, die über die Standardbelegung der Anschlusseinrichtung hinaus und ohne diese zu behindern die Möglichkeit bietet, eine Sensoreinrichtung 14 anzuschließen. In Fig. 2 ist die Sensoreinrichtung 14 sowohl bei der vierten Anschlusseinrichtung 9 als auch bei der weiteren Anschlusseinrichtung 11 beispielhaft dargestellt. Das Signal der Sensoreinrichtung 14 wird bei dem in Fig. 2 gezeigten Ausführungsbeispiel über eine Signalleitung an eine Auswerteeinheit 15 übermittelt, die über eine weitere Signalleitung mit den Anschlusseinrichtungen 7 und 12 verbunden ist. Auch hier erfolgt die Bereitstellung des Signals von der Auswerteeinheit 15 zusätzlich zur Standardbelegung der Anschlusseinrichtungen 7 und 12. An eine der Anschlusseinrichtungen kann eine Signalgebereinrichtung 16 angeschlossen werden, die in Fig. 2 beispielhaft bei Anschlusseinrichtung 12 gezeigt ist.

Auf diese Weise wird ermöglicht, dass bei dem erfindungsgemäßen Verbund elektrischer Komponenten eines Kameratragesystems mit Hilfe eines Sensors 14 der Zustand einer Tally-Signalleuchte der Kamera erfasst und über die zusätzliche Signalleitung an einem Signalgeber 16 übertragen wird. Der sonst für den Kameramann oft nicht sichtbare Leuchtzustand der Tally-Signalanzeige wird so auf einen weiteren Signalgeber übertragen und kann an einer für den Kameramann besser sichtbaren Stelle des Kameratragesystems bereitgestellt werden.

Sofern die Sensoreinrichtung entsprechend ausgestaltet ist, kann auf die Auswerteeinheit 15 verzichtet werden, so dass eine einzige zusätzliche Signalleitung zwischen den Anschlusseinrichtungen vorgesehen werden muss, um den Anschluss des Sensors und des Signalgebers zu ermöglichen.

Erfindungsgemäß sind vorzugsweise zumindest einzelne Anschlusseinrichtungen in doppelter Ausführung vorgesehen, so dass zwei Anschlussbuchsen für eine Anschlussfunktion vorhanden sind. In Fig. 2 ist diese Gestaltung beispielhaft für die vierte Anschlusseinrichtung 9 gezeigt, die zusätzlich als fünfte Anschlusseinrichtung 9' vorgesehen ist. Durch entsprechende räumliche Anordnung der doppelt ausgeführten Anschlussbuchsen, beispielsweise in den in Fig. 1 gezeigten Anschlussboxen 27 und 28, kann mit kurzen Anschlusskabeln eine Verbindung entsprechend der Hauptfunktion an einer der Anschlussbuchsen hergestellt, also ein Peripheriegerät angeschlossen werden, und eine Zusatzfunktion über die andere Anschlussbuchse genutzt werden.

## Patentansprüche

1. Körpermontierbares Kameratragesystem mit einem multifunktionalen Verbund elektrischer Komponenten, nämlich mit
- zumindest einer ersten Anschlusseinrichtung (1) für die kabelgebundene Zuführung eines Videosignals von einer Kamera (2);
- zumindest einer zweiten Anschlusseinrichtung (4) für die kabelgebundene Zuführung eines Videosignals zu einem Peripheriegerät, beispielsweise einem Monitor, einem Videoaufzeichnungsgerät und/oder einer Sendeeinrichtung für Videosignale;
- mehreren Signalleitungen (R, G, B) für die Übertragung der Videosignale zwischen den Anschlusseinrichtungen; und
- zumindest einer Betriebsmodusumschalteinrichtung (5, 5a, 5b, 5c) für die Umschaltung des Betriebsmodus der Anschlusseinrichtungen (1, 4) und der Signalleitungen (R, G, B),
-- wobei in einem ersten Betriebsmodus die mehreren Signalleitungen für die Übertragung eines Videosignals eines ersten Typs, beispielsweise ein hochauflösendes Videosignal, verwendbar sind und
-- wobei in einem zweiten Betriebsmodus ein Teil der mehreren Signalleitungen für die Übertragung eines Videosignals eines zweiten Typs verwendbar ist und der verbleibende Teil der mehreren Signalleitungen für andere Zwecke verwendbar ist.

2. Kameratragesystem nach Anspruch 1, **dadurch gekennzeichnet, dass** in dem ersten Betriebsmodus die mehreren Signalleitungen (R, G, B) eine direkte Verbindung zwischen der ersten und der zweiten Anschlusseinrichtung (1, 4) herstellen.

3. Kameratragesystem nach einem der vorangegangenen Ansprüche, **dadurch gekennzeichnet, dass** eine dritte Anschlusseinrichtung (7) für die kabelgebundene Zuführung eines Videosignals zu einem Peripheriegerät vorgesehen ist, der in dem zweiten Betriebsmodus das Videosignal einer Signalleitung (R) der mehreren Signalleitungen zugeführt wird und von der ein Videosignal des Peripheriegeräts der zweiten Anschlusseinrichtung (4) zugeführt wird.

4. Kameratragesystem nach einem der Ansprüche 1 oder 2, **dadurch gekennzeichnet, dass** in dem zweiten Betriebsmodus
- das Videosignal von einer Signalleitung (R) der mehreren Signalleitungen einem Eingang einer Video-Verstärker/Multiplexer-Einrichtung (6) zugeführt wird,
- das Videosignal eines ersten Ausgangs der Video-Verstärker/Multiplexer-Einrichtung (6) der zweiten Anschlusseinrichtung (4) zugeführt wird und
- das Videosignal eines zweiten Ausgangs der Video-Verstärker/Multiplexer-Einrichtung (6) einer vierten Anschlusseinrichtung (9) für die kabelgebundene Zuführung eines Videosignals zu einem Peripheriegerät zugeführt wird.

5. Kameratragesystem nach Anspruch 4, **dadurch gekennzeichnet, dass** das Videosignal des ersten Ausgangs der Video-Verstärker/Multiplexer-Einrichtung (6) der dritten Anschlusseinrichtung (7) zugeführt wird und das Videosignal von der dritten Anschlusseinrichtung der zweiten Anschlusseinrichtung (4) zugeführt wird.

6. Kameratragesystem nach einem der Ansprüche 4 oder 5, **dadurch gekennzeichnet, dass** in dem zweiten Betriebsmodus das Videosignal eines dritten Ausgangs der Video-Verstärker/Multiplexer-Einrichtung (6) der ersten Anschlusseinrichtung (1) über eine Signalleitung (B) des verbleibenden Teils der mehreren Signalleitungen zugeführt wird.

7. Kameratragesystem nach einem der vorangegangenen Ansprüche, **dadurch gekennzeichnet, dass** zumindest eine Signalleitung (G) der mehreren Signalleitungen ohne Unterbrechung zwischen der ersten und der zweiten Anschlusseinrichtung (1, 4) verläuft.

8. Kameratragesystem nach einem der vorangegangenen Ansprüche, **dadurch gekennzeichnet, dass** weitere Anschlusseinrichtungen (10, 11, 12) für die Zuführung/Verteilung elektrischer Energie zu der Kamera und/oder zu Peripheriegeräten vorgesehen sind.

9. Kameratragesystem nach einem der vorangegangenen Ansprüche, **dadurch gekennzeichnet, dass** zumindest eine der Anschlusseinrichtungen (9, 9') in doppelter Ausführung vorgesehen sind.

10. Kameratragesystem nach einem der vorangegangenen Ansprüche, **dadurch gekennzeichnet, dass** zumindest zwei der Anschlusseinrichtungen (7, 9, 9', 10, 11, 12) mit zumindest einer zusätzlichen Signalleitung verbunden sind, so dass an der einen der zwei Anschlusseinrichtungen eine Sensoreinrichtung (14) und an der anderen der zwei Anschlusseinrichturigen eine Signalgebereinrichtung (16) kabelgebunden anschließbar sind.

11. Kameratragesystem nach Anspruch 10, **dadurch gekennzeichnet, dass** in der zusätzlichen Signalleitung eine Auswerteeinheit (15) für die Auswertung des Signals von der Sensoreinrichtung (14) und für die Zuführung eines Ansteuersignals an die Signalgebereinrichtung (16) vorgesehen ist.

## Claims

1. Body-mountable camera-carrying system having a multifunctional combination of electrical components, namely having
- at least one first terminal device (1) for the wired delivery of a video signal from a camera (2);
- at least one second terminal device (4) for the wired delivery of a video signal to a peripheral device, for example a monitor, a video recording device and/or a transmitting device for video signals;
- a plurality of signal wires (R, G, B) for transmission of the video signals between the terminal devices; and
- at least one device (5, 5a, 5b, 5c) for switching the mode of operation of the terminal devices (1, 4) and of the signal wires (R, G, B),
-- wherein in a first mode of operation the plurality of signal wires can be used for the transmission of a video signal of a first type, for example a high-resolution video signal, and
-- wherein in a second mode of operation some of the plurality of signal wires can be used for the transmission of a video signal of a second type, and the remainder of the plurality of signal wires can be used for other purposes.

2. Camera-carrying system according to claim 1, **characterised in that** in the first mode of operation the plurality of signal wires (R, G, B) make a direct connection between the first and second terminal devices (1, 4).

3. Camera-carrying system according to any of the preceding claims, **characterised in that** a third terminal device (7) is provided for the wired delivery of a video signal to a peripheral device, to which terminal device (7) the video signal of one signal wire (R) of the plurality of signal wires is delivered in the second mode of operation and from which a video signal of the peripheral device is delivered to the second terminal device (4).

4. Camera-carrying system according to either of claims 1 or 2, **characterised in that** in the second mode of operation
- the video signal of one signal wire (R) of the plurality of signal wires is delivered to an input of a video amplifier/multiplexer device (6),
- the video signal of a first output of the video amplifier/multiplexer device (6) is delivered to the second terminal device (4) and
- the video signal of a second output of the video amplifier/multiplexer device (6) is delivered to a fourth terminal device (9) for the wired delivery of a video signal to a peripheral device.

5. Camera-carrying system according to claim 4, **characterised in that** the video signal of the first output of the video amplifier/multiplexer device (6) is delivered to the third terminal device (7), and the video signal of the third terminal device is delivered to the second terminal device (4).

6. Camera-carrying system according to either of claims 4 or 5, **characterised in that** in the second mode of operation the video signal of a third output of the video amplifier/multiplexer device (6) is delivered to the first terminal device (1) via one signal wire (B) of the remainder of the plurality of signal wires.

7. Camera-carrying system according to any of the preceding claims, **characterised in that** at least one signal wire (G) of the plurality of signal wires runs without interruption between the first and second terminal devices (1, 4).

8. Camera-carrying system according to any of the preceding claims, **characterised in that** further terminal devices (10, 11, 12) are provided for the delivery/distribution of electrical energy to the camera and/or to peripheral devices.

9. Camera-carrying system according to any of the preceding claims, **characterised in that** at least one of the terminal devices (9, 9') is provided in a double format.

10. Camera-carrying system according to any of the preceding claims, **characterised in that** at least two of the terminal devices (7, 9, 9', 10, 11, 12) are connected to at least one additional signal wire, so that at one of the two terminal devices a sensor device (14) can be connected by wires and at the other of the two terminal devices a signal transmitter device (16) can be connected by wires.

11. Camera-carrying system according to claim 10, **characterised in that** in the additional signal wire is provided an evaluating unit (15) for evaluation of the signal from the sensor device (14) and for the delivery of a driving signal to the signal transmitter device (16).

## Revendications

1. Système de portage de caméra pouvant être monté sur le corps, doté d'un assemblage multifonctionnel de composants électriques, précisément avec :
- au moins un premier dispositif de raccordement (1), pour l'amenée, liée par câble, d'un signal vidéo provenant d'une caméra (2) ;
- au moins un deuxième dispositif de raccordement (4), pour l'amenée, liée par câble, d'un signal vidéo à un appareil périphérique, par exemple à un moniteur, à un appareil d'enregistrement vidéo et/ou à un dispositif émetteur pour des signaux vidéo ;
- une pluralité de lignes de signalisation (R, G, B) pour la transmission des signaux vidéo entre les dispositifs de raccordement ; et
- au moins un dispositif de commutation de mode de fonctionnement (5, 5a, 5b, 5c), pour la commutation du mode de fonctionnement des dispositifs de raccordement (1, 4) et des lignes de signalisation (R, G, B),
-- où, dans un premier mode de fonctionnement, la pluralité de lignes de signalisation sont utilisables pour la transmission d'un signal vidéo d'un premier type, par exemple un signal vidéo à haute résolution, et
-- où, dans un deuxième mode de fonctionnement, une partie de la pluralité des lignes de signalisation est utilisable pour la transmission d'un signal vidéo d'un deuxième type, et la partie restante de la pluralité des lignes de signalisation est utilisable à d'autres fins.

2. Système de portage de caméra selon la revendication 1, **caractérisé en ce que**, dans le premier mode de fonctionnement, la pluralité de lignes de signalisation (R, G, B) établissent une liaison directe entre le premier et le deuxième dispositif de raccordement (1, 4).

3. Système de portage de caméra selon l'une des revendications précédentes, **caractérisé en ce qu'**un troisième dispositif de raccordement (7) est prévu pour l'amenée, liée par câble, d'un signal vidéo à un appareil périphérique, auquel, dans le deuxième mode de fonctionnement, le signal vidéo, d'une ligne de signalisation (R) de la pluralité des lignes de signalisation, est amené et d'où un signal vidéo est amené de l'appareil périphérique au deuxième dispositif de raccordement (4).

4. Système de portage de caméra selon l'une des revendications 1 ou 2, **caractérisé en ce que**, dans le deuxième mode de fonctionnement,
- le signal vidéo est amené, d'une ligne de signalisation (R) de la pluralité de lignes de signalisation à une entrée d'un dispositif amplificateur/multiplexeur vidéo (6),
- le signal vidéo de la première sortie du dispositif amplificateur/multiplexeur vidéo (6) est amené au deuxième dispositif de raccordement (4), et
- le signal vidéo d'une deuxième sortie du dispositif amplificateur/multiplexeur vidéo (6) est amené à un quatrième dispositif de raccordement (9) pour l'amenée, liée par câble, d'un signal vidéo à un appareil périphérique.

5. Système de portage de caméra selon la revendication 4, **caractérisé en ce que** le signal vidéo de la première sortie du dispositif amplificateur/multiplexeur vidéo (6) est amené au troisième dispositif de raccordement (7), et le signal vidéo est amené du troisième dispositif de raccordement au deuxième dispositif de raccordement (4).

6. Système de portage de caméra selon l'une des revendications 4 ou 5, **caractérisé en ce que**, dans le deuxième mode de fonctionnement, le signal vidéo d'une troisième sortie du dispositif amplificateur/multiplexeur vidéo (6) est amené au premier dispositif de raccordement (1), par une ligne de signalisation (B) de la partie restante de la pluralité des lignes de signalisation.

7. Système de portage de caméra selon l'une des revendications précédentes, **caractérisé en ce que** la au moins une ligne de signalisation (G) de la pluralité des lignes de signalisation s'étend, sans interruption, entre le premier et le deuxième dispositif de raccordement (1, 4).

8. Système de portage de caméra selon l'une des revendications précédentes, **caractérisé en ce que** d'autres dispositif de raccordement (10, 11, 12) sont prévus pour l'amenée/distribution d'énergie électrique à la caméra et/ou à des appareils périphériques.

9. Système de portage de caméra selon l'une des revendications précédentes, **caractérisé en ce qu'**au moins l'un des dispositifs de raccordement (9, 9') sont prévus en double exemplaire.

10. Système de portage de caméra selon l'une des revendications précédentes, **caractérisé en ce qu'**au moins deux des dispositifs de raccordement (7, 9, 9', 10, 11, 12) sont reliés à au moins une ligne de signalisation supplémentaire, de manière que, à l'un des deux dispositifs de raccordement, un dispositif à capteur (14) et, à l'autre des deux dispositifs de raccordement, un dispositif à capteur de signal (16) soient susceptibles d'être raccordés, en étant reliés par câble.

11. Système de portage de caméra selon la revendication 10, **caractérisé en ce qu'**une unité d'évaluation (15), pour l'évaluation du signal provenant du dispositif à capteur (14) et pour l'amenée d'un signal de commande au dispositif à capteur de signal (16), est prévue dans la ligne de signalisation supplémentaire.
